# FASCICULE DE BREVET EUROPEEN

(11) **EP 0 509 257 B1**
(45) Date de publication et mention de la délivrance du brevet: **28.12.1994**
(21) Numéro de dépôt: 92104622.3
(22) Date de dépôt: 18.03.1992
(51) Int. Cl.: A23F 5/48

(54) **Procédé d'aromatisation d'une poudre de café soluble**
Verfahren zum Aromatisieren von löslichem Kaffeepulver
Method for aromatizing soluble coffee powder

(30) Priorité: 17.04.1991 CH 1157/91
(43) Date de publication de la demande: 21.10.1992
(73) Titulaire: SOCIETE DES PRODUITS NESTLE S.A., 1800 Vevey (CH)
(72) Inventeur: Blanc, Maurice, CH-1110 Morges (CH)

(56) Documents cités:
- EP-A- 0 215 164
- US-A- 3 717 472
- US-A- 3 991 223
- WORLD PATENTS INDEX Section Ch, 1976 Derwent Publications Ltd., London, GB; Class D, AN 76-88869X

## Description

La présente invention est relative à un procédé d'aromatisation d'une poudre de café soluble.

La présente invention a plus particulièrement pour objet un procédé de ce tue dans lequel une huile aromatisée est réincorporée dans la poudre de café soluble pour obtenir un produit à l'arôme renforcé se rapprochant de l'arôme d'un café rôti.

En effet, la poudre de café soluble est classiquement produite par lyophylisation ou atomisation après évaporation d'un extrait de café obtenu par la percolation à contre-courant d'un liquide d'extraction à travers des cellules remplies de café torréfié moulu.

Un des problèmes majeurs de ce tue de procédé réside dans le fait que le produit obtenu ne présente pas l'arôme d'un café rôti, ceci étant dû en particulier, d'une part, au procédé d'extraction, et, d'autre part, aux étapes d'évaporation et de lyophylisation ou d'atomisation, qui entraînent inévitablement des pertes d'arômes importantes.

Différentes solutions ont été proposées dans lesquelles une huile, généralement une huile de café, est enrichie en arômes de café puis pulvérisée sur la poudre de café soluble, ou incorporée dans un bocal rempli de café soluble en poudre.

La principale source d'arômes connue et utilisée est constituée par les arômes dégagés par le café rôti moulu.

On connaît ainsi, par exemple par le document FR 2.336.088, un procédé dans lequel un gaz inerte circule à travers un café rôti moulu. Ce gaz inerte se charge en arômes et un givre est formé par la condensation du dioxyde de carbone entrainé, de l'humidité et des arômes. Ce givre est ensuite, sous des conditions de température et de pression déterminées, mis en contact avec une huile qui récupère ainsi une partie des arômes contenus dans le givre. L'huile obtenue peut ensuite être incorporée à une poudre de café soluble.

Malheureusement, il est connu depuis fort longtemps que l'arôme de café est assez peu stable, cette instabilité étant encore accrue quand on sépare cet arôme de café de son substrat naturel. Ainsi, la mise en oeuvre du procédé décrit ci-avant conduit parfois assez rapidement au développement de notes aromatiques s'éloignant de l'arôme d'origine, la stabilité du produit final dépendant en particulier de la structure de la poudre de café soluble, comme cela est d'ailleurs décrit dans US 3.769.032.

Différentes tentatives ont été réalisées tendant à ne mettre en solution dans l'huile qu'une fraction des arômes contenus dans le givre. On connaît ainsi par le document EP 215.164 un procédé de ce tue dont le principal inconvénient réside dans la complexité de sa mise en oeuvre.

Par ailleurs, on connaît par US 3991223 un procédé de fractionnement d'un arôme de café rôti moulu entraîné à la vapeur, par condensation de la vapeur chargée d'arômes, mise en contact du condensat avec une première huile séparation, remise en contact de la phase aqueuse séparée avec une deuxième huile, séparation et réincorporation d'une part de la phase aqueuse résultante encore aromatique dans un extrait aqueux de café destiné à être lyophilisé et d'autre part de la deuxième huile aromatisée dans un extrait aqueux de café destiné à être séché par atomisation.

La présente invention a ainsi pour but de proposer un procédé simple de fractionnement des arômes contenus dans un givre produit par la condensation du dioxyde de carbone chargé en arômes de café rôti et en humidité, permettant de n'incorporer dans une huile qu'une partie des arômes contenus dans le givre.

La présente invention a ainsi pour objet un procédé d'aromatisation d'une poudre de café soluble, par incorporation d'une huile enrichie en arômes de café à une poudre de café soluble, comprenant les étapes suivantes :
a) un givre est produit par la condensation de dioxyde de carbone chargé en arômes de café rôti et en eau,
b) le givre obtenu est ensuite mis en contact avec une première huile dans un rapport pondéral première huile/givre inférieur à 0,15, et sublimé,
c) la phase huileuse est éliminée,
d) la phase aqueuse résiduelle est mise en contact avec une deuxième huile, dans un rapport pondéral huile/phase aqueuse résiduelle supérieur à 1, et
e) la phase huileuse ainsi obtenue est incorporée à une poudre de café soluble.

L'invention sera mieux comprise à la suite de la description qui va suivre.

Un givre, chargé en arômes de café, provenant de la condensation cryogénique de dioxyde de carbone, est mis en contact avec une huile de café, mais une autre huile pourrait convenir, et sublimé.

Toutes choses égales par ailleurs, plus la température de désorption des arômes de café torréfié est élevée, plus la teneur en arômes du givre est importante.

L'huile utilisée lors de cette mise en contact avec le givre peut être une huile liquide. Il se forme, lors de la fonte de la phase aqueuse solide contenue dans le givre qui suit la sublimation du dioxyde de carbone, une émulsion entre l'huile et la phase aqueuse, la phase aqueuse résiduelle et la phase huileuse étant ensuite séparées par exemple par centrifugation.

Il est pourtant apparu qu'il se produit parfois, lors de la sublimation du dioxyde de carbone en contact avec l'huile liquide, des phénomènes d'entraînement d'arômes par le dégazage du dioxyde de carbone, phénomènes qui peuvent être pénalisant pour la suite du procédé.

C'est pourquoi, selon une variante de l'invention, le givre est mis en contact avec une huile qui a été préalablement congelée et granulée. Le mélange de ces deux produits est ainsi réalisé intimement tout en minimisant les pertes d'arômes qui seraient causées par l'agitation d'une huile liquide et d'un givre.

Ce mélange huile-givre est ensuite sublimé pendant environ 48 heures à -40°C puis décongelé à température ambiante et enfin réchauffé à 40°C pour être centrifugé générant ainsi une première phase huileuse et une phase aqueuse résiduelle.

La quantité d'arômes transférés du givre vers l'huile est fonction du rapport pondéral huile/givre. Plus ce rapport est faible plus la quantité transférée dans l'huile est faible, mais plus la concentration de cette huile en arômes est élevée.

Cette étape de mise en contact d'une huile et d'un givre vise à éliminer certains arômes susceptibles d'entraîner une diminution des qualités organoleptiques du produit final.

Les composés transférés dans cette huile sont principalement des furanes et des pyroles ainsi que des composés tels que des thiophènes qui sont considérés comme étant responsables de l'altération des arômes de café rôti.

Pour éliminer, ou tout au moins pour réduire substantiellement la quantité de ces arômes présents initialement dans le givre, il a été choisi d'utiliser un rapport pondéral huile/givre inférieur à 0,15 qui permet par ailleurs de ne pas trop appauvrir la phase aqueuse résiduelle en arômes désirés. En effet, même si ce sont principalement les arômes instables qui sont transférés dans l'huile, ce ne sont pas les seuls à l'être.

Ceci explique que le rapport huile/givre de cette étape de l'invention est notablement différent de celui caractérisant l'art antérieur dans lequel l'huile, après sa mise en contact avec le givre, est l'huile chargée en arômes qui sera directement utilisée dans le processus d'aromatisation de la poudre de café soluble. Il est alors nécessaire de transférer le plus possible d'arômes du givre vers l'huile et il est donc utilisé des rapports pondéraux huile/givre supérieurs à 0,5.

La phase huileuse produite dans le procédé selon l'invention est ensuite éliminée alors que la phase aqueuse résiduelle est mise en contact avec une deuxième huile.

A ce stade, les composés indésirables ayant été éliminés lors de l'opération précédente, il est nécessaire de transférer le plus possible d'arômes de cette phase aqueuse résiduelle vers la deuxième huile. Malgré tout, pour ne pas obtenir une concentration trop faible de l'huile en arômes, qui va de paire avec un meilleur transfert et donc un rapport huile/phase aqueuse résiduelle aussi élevé que possible, il est préférable de procéder avec un rapport pondéral huile/phase aqueuse résiduelle compris entre 1,3 et 2.

Il est donc possible, d'après le procédé selon l'invention, en jouant sur les rapports pondéraux première huile/givre, deuxième huile/phase aqueuse résiduelle, ainsi que sur la température de désorption des arômes de café torréfié lors de la phase de condensation cryogénique,
d'obtenir une huile chargée en arômes de café stables dont la composition exacte en arômes peut être modulée.

Les exemples suivants illustreront l'invention.

### Exemple 1 :

Cet exemple est un témoin illustrant la technique antérieure.

1652 g de givre ont été produits à partir de 315 kg de café rôti. Ce givre a été ensuite mis en contact avec 808 g d'huile de café. Il a été finalement produit, après sublimation décongélation et centrifugation 727 g d'huile aromatique.

La teneur en carbone organique total de la fraction volatile d'une huile (exprimée en mg pour 100 g d'huile) est fonction de la teneur en arômes de l'huile et est donc le reflet de la richesse de cette huile en arômes.

La teneur en carbone organique total de cette huile était de 2019.

### Exemple 2 :

2268 g de givre ont été produits à partir de 310 kg de café rôti à une température de désorption de 55°C. Ce givre a été ensuite mis en contact avec 200 g d'huile de café. Il a été obtenu une phase aqueuse résiduelle de 174 g qui a été elle-même mise en contact avec 348 g d'une deuxième huile pour donner 315 g d'huile aromatique ayant une teneur en carbone organique total de 1763.

### Exemple 3 :

1800 g de givre ont été produits à partir de 315 kg de café rôti à une température de désorption de 55°C. Ce givre a été mis en contact avec 200 g d'une première huile. Une phase aqueuse résiduelle de 191 g a été mise en contact avec 384 g d'une deuxième huile pour donner finalement 323 g d'huile aromatique avec une teneur en carbone organique total de 1949.

### Exemple 4 :

2730 g de givre ont été produits à partir de 315 kg de café rôti à une température de désorption de 67°C. Ce givre a été mis contact avec 300 g d'huile. Une phase aqueuse résiduelle de 440 g a été obtenue qui a été mise en contact avec 572 g d'une deuxième huile. Il a été finalement obtenu 520 g d'huile aromatique avec une teneur en carbone organique total de 1613.

Le tableau récapitulatif ci-après illustre l'évolution au cours du temps d'un café soluble en poudre sur lequel une huile aromatique a été pulvérisée.

Pour ce faire, une note hédonique a été donnée aux différents cafés obtenus par pulvérisation des huiles aromatiques produites aux exemples 1 et 3. Ces exemples ont été choisis car ils présentent des teneurs en carbone organique total très voisines et donc, au départ, des arômes de forces identiques.

Le tableau ci-dessous illustre ainsi l'évolution, au cours du temps des notes hédoniques données à chacun des cafés obtenus avec une huile selon l'exemple 1 (référence) et selon l'exemple 3 (invention ).

| Durée (en mois) | Note hédonique d'un café obtenu avec l'huile de référence selon l'exemple 1 | Note hédonique d'un café obtenu avec l'huile de l'invention selon l'exemple 3 |
|---|---|---|
| 0 | 6,6 | 6,6 |
| 1 | 5,3 | 6,4 |
| 2 | 6,0 | 6,7 |
| 3 | 5,5 | 6,0 |
| 4 | 5,1 | 6,3 |
| 6 | 4,8 | 5,9 |
| 9 | 4,6 | 5,5 |

Il apparait ainsi clairement que le café obtenu avec l'huile du procédé selon l'invention présente des caractéristiques aromatiques beaucoup plus stables, en conservant l'essentiel de ses caractéristiques pendant environ quatre mois de stockage et en ne subissant qu'une légère détérioration de celles-ci après neuf mois de stockage.

## Revendications

1. Procédé d'aromatisation d'une poudre de café soluble, par incorporation d'une huile enrichie en arômes de café à une poudre de café soluble, comprenant les étapes suivantes:
a) un givre est produit par la condensation de dioxyde de carbone chargé en arômes de café rôti et en eau,
b) le givre obtenu est ensuite mis en contact avec une première huile, dans un rapport pondéral première huile/givre inférieur à 0,15, et sublimé,
c) la phase huileuse est éliminée,
d) la phase aqueuse résiduelle est mise en contact avec une deuxième huile, dans un rapport pondéral deuxième huile/phase aqueuse résiduelle supérieur à 1, et
e) la phase huileuse ainsi obtenue est incorporée à une poudre de café soluble.

2. Procédé selon la revendication 1, dans lequel la phase aqueuse résiduelle est mise en contact avec une deuxième huile dans un rapport pondéral huile/phase aqueuse résiduelle compris entre 1,3 et 2.

3. Procédé selon la revendication 1, dans lequel le givre issu de la condensation du dioxyde de carbone chargé en arômes et en eau est mis en contact avec une huile qui a été préalablement congelée et granulée.

## Claims

1. A process for flavouring soluble coffee powder by incorporation of an oil enriched with coffee flavours in a soluble coffee powder, comprising the following steps:
a) a frost is produced by the condensation of carbon dioxide charged with roasted coffee aromas and with water,
b) the frost obtained is then contacted with a first oil in a ratio by weight of first oil to frost of less than 0.15 and sublimated,
c) the oily phase is eliminated,
d) the residual aqueous phase is contacted with a second oil in a ratio by weight of second oil to residual aqueous phase of greater than 1 and
e) the oily phase thus obtained is incorporated in a soluble coffee powder.

2. A process as claimed in claim 1, in which the residual aqueous phase is contacted with a second oil in a ratio by weight of oil to residual aqueous phase of 1.3 to 2.

3. A process as claimed in claim 1, in which the frost formed by the condensation of carbon dioxide charged with aromas and with water is contacted with an oil which was frozen and granulated beforehand.

## Patentansprüche

1. Verfahren zum Aromatisieren eines löslichen Kaffepulvers, durch Beimengen eines an Kaffegeschmacks- und/oder -aromastoffen angereicherten Öles zu einem löslichen Kaffeepulver, welches Verfahren die folgenden Stufen umfaßt:
a) durch Kondensieren von Kohlendioxid, welches mit Geschmacks- und/oder Aromastoffen von Röstkaffee und mit Wasser beladen ist, wird ein Schnee erzeugt;
b) der so erhaltene Schnee wird anschließend mit einem ersten Öl in Berührung gebracht, und zwar in einem Gewichtsverhältnis des ersten Öles zu dem Schnee von unter 0,15, und er wird sublimiert,
c) die Ölphase wird eliminiert;
d) die restliche wässerige Phase wird mit einem zweiten Öl in Berührung gebracht, und zwar in einem Gewichtsverhältnis des zweiten Öles zu der restlichen wässerigen Phase von über 1; und
e) die so erhaltene Ölphase wird einem löslichen Kaffepulver beigemengt.

2. Verfahren nach Anspruch 1, wobei die restliche wässerige Phase mit einem zweiten Öl in einem Gewichtsverhältnis des Öles zu der restlichen wässerigen Phase zwischen 1,3 und 2 in Berührung gebracht wird.

3. Verfahren nach Anspruch 1, bei welchem der Schnee, der aus der Kondensation des mit Geschmacks- und/oder Aromastoffen und mit Wasser beladenen Kohlendioxids entstanden ist, mit einem Öl in Berührung gebracht wird, welches zuvor gefroren und granuliert worden ist.
